(19) Europäisches Patentamt
European Patent Office
Office européen des brevets

(11) EP 4 536 724 B1

(12) EUROPEAN PATENT SPECIFICATION

(45) Date of publication and mention of the grant of the patent:
**05.08.2026 Bulletin 2026/32**

(21) Application number: **23738970.5**

(22) Date of filing: **09.06.2023**

(51) International Patent Classification (IPC):
***C08G 18/32*** (2006.01) ***C08G 18/40*** (2006.01)
***C08G 18/44*** (2006.01) ***C08G 18/50*** (2006.01)
***C08G 18/61*** (2006.01) ***C08G 18/62*** (2006.01)
***C08G 18/66*** (2006.01) ***C08G 18/76*** (2006.01)

(52) Cooperative Patent Classification (CPC):
**C08G 18/7671; C08G 18/3206; C08G 18/3215; C08G 18/4018; C08G 18/4063; C08G 18/44; C08G 18/5015; C08G 18/61; C08G 18/6208; C08G 18/6637; C08G 18/664**

(86) International application number:
**PCT/US2023/024905**

(87) International publication number:
**WO 2023/239891 (14.12.2023 Gazette 2023/50)**

(54) **THERMOPLASTIC POLYURETHANES WITH HIGH TEMPERATURE STABILITY AND USES THEREOF**

THERMOPLASTISCHE POLYURETHANE MIT HOHER TEMPERATURSTABILITÄT UND VERWENDUNGEN DAVON

POLYURÉTHANES THERMOPLASTIQUES À STABILITÉ À HAUTE TEMPÉRATURE ET LEURS UTILISATIONS

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **10.06.2022 US 202263350893 P**

(43) Date of publication of application:
**16.04.2025 Bulletin 2025/16**

(73) Proprietor: **Lubrizol Advanced Materials, Inc.**
**Cleveland, OH 44141-3247 (US)**

(72) Inventors:
- **LAN, Qiang**
**Cleveland, Ohio 44141-3247 (US)**
- **GRIMALDI, Nicholas, J.**
**Hartville, Ohio 44632-9086 (US)**
- **COX, John, M.**
**San Antonio, Texas 78260 (US)**

(74) Representative: **Evans, Sophie Elizabeth et al**
**Kilburn & Strode LLP**
**Lacon London**
**84 Theobalds Road**
**London WC1X 8NL (GB)**

(56) References cited:
**EP-A1- 3 441 508**
**WO-A1-00/32668**
**WO-A1-2019/016313**
**US-A1- 2019 153 147**
**US-A1- 2020 095 515**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 4 536 724 B1

## Description

## FIELD OF INVENTION

The instant disclosure relates to thermoplastic polyurethane (TPU) compositions containing the TPU reaction product of an aromatic polyisocyanate, a mixture of diols, and a chain extender where the TPU has a hard block content of at least 30 wt %. The TPU of the instant disclosure exhibit high temperature stability and have a particular use in the formation of cable and/or wire coatings.

## BACKGROUND OF THE INVENTION

The use of polyurethanes, including thermoplastic polyurethanes (TPU) in transfer elements, such as tubes or hoses, or coating cable systems is known in the prior art. TPUs offer a variety of benefits that extend the durability and service life of transfer elements and cable systems. This is due to outstanding abrasion resistance, high mechanical properties, high impact resistance, low temperature flexibility, good chemical resistance, high cut and tear resistance, and good environmental weathering. The state of the art shows several needs for TPUs when used in transfer elements and cable systems. Some of these needs include for example, the desire for transfer elements or cable systems used under extremely hot environmental or working conditions, such as for example meeting the high temperature requirements for Class D type cables (ISO 6722) or cables with heat ratings of 125° C. or higher (UL1581).

U.S Patent Application Publication No. 2017/0210846A1 discloses TPU composition that contain alkylene substituted spirocyclic compounds as chain extenders and polycarbonate polyols for high temperature resistance.

U.S. Patent No. 11,168,175B2 discloses thermoplastic polyurethanes obtainable or obtained by the conversion of at least a polyisocyanate composition, ethane-1,2-diol as chain extender and a polyol composition, wherein no further chain extender is used aside from ethane-1,2-diol.

International Publication No. WO 2019/002226 discloses a highly heat-resistant thermoplastic polyurethane composition for injection or press molding and to a method for preparing the composition, the composition being characterized by being a mixture of a diisocyanate compound or a cross-linking agent and a thermoplastic polyurethane synthesized by brining (A) an ether-containing polyester polyol, (B) a chain extender and (C) a diisocyanate compound into a reaction.

International Publication No. WO 2019/016313 is said to disclose a polyurethane, in particular a thermoplastic polyurethane, obtainable or obtained by reacting at least the components (i) to (ii): (i) a polyisocyanate composition; (ii) a polyol composition comprising (ii.1) at least one polyester diol or polyether diol having a number-average molecular weight in the range of 500 to 3000 g/mol, (ii.2) at least one polysiloxane having two terminal, isocyanate-reactive functionalities selected from the group consisting of thio group, hydroxyl group and amino group.

Thus, there is a general need in the state of the art for TPU compositions that can be used in systems requiring high temperature resistance, while maintaining other physical properties like tensile strength and elongation, for example.

## SUMMARY OF THE INVENTION

The instant disclosure relates to thermoplastic polyurethane compositions polyurethane (also referred to herein as "TPU compositions") that include the reaction product of an aromatic polyisocyanate, a diol mixture, and a chain extender. The diol mixture used to form the reaction product comprises a first diol, which first diol is a polycarbonate polyol, and a second diol selected from one or more of a perfluoropolyether and a hydrogenated polybutadiene diol, where the content of the second diol in the diol mixture is at least 15 wt % of the diol mixture, and a chain extender. The reaction product of the TPU composition include a hard block content of at least 30 wt. %.

In another aspect of the instant disclosure relates to a cable or wire coated with a TPU composition where the TPU composition includes the reaction product of an aromatic polyisocyanate, a diol mixture having a first diol, which first diol is a polycarbonate polyol, and a second diol selected from one or more of a perfluoropolyether and a hydrogenated polybutadiene diol, where the content of the second diol in the diol mixture is at least 15 wt % of the diol mixture, and a chain extender, where the reaction product of the TPU composition had a hard block content of at least 30 wt. %.

Another aspect of the instant disclosure relates to a seal or a gasket formed from a TPU composition where the TPU composition includes the reaction product of an aromatic polyisocyanate, a diol mixture having a first diol, which first diol is a polycarbonate polyol, and a second diol is selected from one or more of a perfluoropolyether and a hydrogenated polybutadiene diol, where the content of the second diol in the diol mixture is at least 15 wt % of the diol mixture, and a chain extender, where the reaction product of the TPU composition had a hard block content of at least 30 wt. %.

In yet another aspect of the instant disclosure relates to the use of a TPU compositions that includes the reaction product of an aromatic polyisocyanate, a diol mixture having a first diol, which first diol is a polycarbonate polyol, and a second diol selected from one or more of a perfluoropolyether and a hydrogenated polybutadiene diol, where the content of

the second diol in the diol mixture is at least 15 wt % of the diol mixture, and a chain extender, where the reaction product of the TPU composition had a hard block content of at least 30 wt. % for increasing high temperature stability of a coated cable or wire.

The following embodiments of the present subject matter are contemplated:

1. A thermoplastic polyurethane composition (TPU) comprising: the reaction product of: an aromatic polyisocyanate; a diol mixture including: a first diol, which first diol is a polycarbonate polyol, and a second diol selected from one or more of a perfluoropolyether and a hydrogenated polybutadiene diol, where the content of the second diol in the diol mixture is at least 15 wt % of the diol mixture; and a chain extender; the reaction product having a hard block content of at least 30 wt %.
2. The composition of embodiment 1, wherein the aromatic polyisocyanate is methylene diphenyl diisocyanate.
3. The composition of embodiment 1 or embodiment 2, wherein the chain extender is selected from one or more of 1, 3-propanediol, hydroquinone bis (2-hydroxyethyl) ether, and 1, 4-butanediol.
4. The composition of any one of the preceding embodiments, wherein the content of the second diol in the diol mixture is at least 18 wt % of the diol mixture.
5. The composition of any one of the preceding embodiments, wherein the content of the second diol in the diol mixture is at least 20 wt % of the diol mixture.
6. The composition of any one of the preceding embodiments, wherein the content of the second diol in the diol mixture is at least 22 wt % of the diol mixture.
7. The composition of any one of the preceding embodiments, wherein the hard block content is at least 32 wt % of the reaction product.
8. The composition of any one of the preceding embodiments, wherein the hard block content is at least 33 wt % of the reaction product.
9. The composition of any one of embodiments 1 to 6, wherein the aromatic polyisocyanate is methylene diphenyl diisocyanate, the first diol is a polycarbonate polyol, the second diol is a perfluoropolyether, and the chain extender is hydroquinone Bis (2-hydroxyethyl) ether, and wherein the composition has a hard block content of at least 33 wt %.
10. The composition of any one of embodiments 1 to 6, wherein the aromatic polyisocyanate is methylene diphenyl diisocyanate, the first diol is a polycarbonate polyol, the second diol is a hydrogenated polybutadiene diol, and the chain extender is 1, 3-propanediol, and wherein the composition has a hard block content of at least 40 wt %.
11. The composition of any one of embodiments 1 to 6, wherein the aromatic polyisocyanate is methylene diphenyl diisocyanate, the first diol is a polycarbonate polyol, the second diol is a hydrogenated polybutadiene diol, and the chain extender is 1, 4-butanediol, and wherein the composition has a hard block content of at least 43 wt %.
12. The composition of any one of the preceding embodiments, wherein the TPU composition has a high temperature stability as measured by percent elongation of less than 20% after heating at 200°C for 6 hours.
13. The composition of any one of the preceding embodiments, wherein the TPU composition has a high temperature stability as measured by percent elongation of less than 18% after heating at 200°C for 6 hours.
14. The composition of any one of the preceding embodiments, wherein the TPU composition has a high temperature stability as measured by percent elongation of less than 6% after heating at 200°C for 6 hours.
15. The composition of any one of embodiments 12 to 14, wherein the percent elongation is measured by providing a TPU compositions molded into rectangular plaques of 1.9 to 2.0 mm thick, about 1.0 cm wide and from 13.0 to 15.0 cm long; placing the plaques on a rod; aging the plaques at a temperature of 200°C for 6 hours; allowing the plaques to cool; and determining the change of length.
16. The composition of any one of the preceding embodiments, wherein the TPU has a retention of tensile strength of 60% and retention ultimate elongation of 60% as determined by ASTM D412 after 6h at 200°C.
17. A cable or wire coated with the TPU composition according to any one of the preceding embodiments.
18. A seal or gasket formed from the TPU composition according to any one of embodiments 1 to 16.
19. The use of a TPU composition according to any one of embodiments 1 to 16 to increase the high temperature stability of a coated cable or wire, a seal or a gasket.

## DETAILED DESCRIPTION OF THE INVENTION

The instant disclosure relates to thermoplastic polyurethane (also referred to herein as "TPU") compositions. The TPU compositions disclosed herein generally include a TPU reaction product of an aromatic polyisocyanate, a diol mixture, and a chain extender and, optionally, other additives ("TPU reaction product"). The TPU composition of the claimed invention comprises the reaction product of an aromatic polyisocyanate, a diol mixture, and a chain extender, the reaction product having a hard block content of at least 30 wt %.

The Polyisocyanate Component:

The TPU reaction product of the compositions of the instant disclosure are made using an aromatic polyisocyanate component. In some embodiments, the polyisocyanate component includes one or more aromatic diisocyanates. Examples of suitable aromatic polyisocyanates include, but are not limited to, 4,4'-methylenebis(phenyl isocyanate) (MDI), m-xylene diisocyanate (XDI), phenylene-1,4-diisocyanate, naphthalene-1,5-diisocyanate, and toluene diisocyanate (TDI); as well as 3,3'-dimethyl-4,4'-biphenylene diisocyanate (TODI) and 1,5-naphthalene diisocyanate (NDI). Mixtures of two or more polyisocyanates may be used. In some embodiments, the polyisocyanate includes MDI.

In some embodiments, the TPU reaction product is essentially free of, or even completely free of, aliphatic polyisocyanates.

In other embodiments, in addition to the aromatic polyisocyanate described above, the thermoplastic polyurethane reaction product may include one or more aliphatic diisocyanates. Suitable aliphatic diisocyanates include isophorone diisocyanate (IPDI), 1,6-hexamethylene diisocyanate (HDI), 1,4-cyclohexyl diisocyanate (CHDI), decane-1,10-diisocyanate, lysine diisocyanate (LDI), 1,4-butane diisocyanate (BDI), and dicyclohexylmethane-4,4'-diisocyanate (H12MDI). In some embodiments, mixtures of two or more polyisocyanates may be used. In some embodiments, the polyisocyanate includes H12MDI. In some embodiments, the polyisocyanate is MDI and H12MDI.

The Polyol Component:

The TPU reaction product of the compositions disclosed herein may be further formed from a polyol or diol. Polyols for use in disclosed reaction product include polyether polyols, polyester polyols, polycarbonate polyols, polysiloxane polyols, and combinations thereof.

Suitable polyols, which may also be described as hydroxyl terminated intermediates, when present, may include one or more hydroxyl terminated polyesters, one or more hydroxyl terminated polyethers, one or more hydroxyl terminated polycarbonates, one or more hydroxyl terminated polysiloxanes, or mixtures thereof.

Suitable hydroxyl terminated polyester intermediates include linear polyesters having a number average molecular weight (Mn) of from about 500 to about 10,000, from about 700 to about 5,000, or from about 700 to about 4,000, and generally have an acid number less than 1.3 or less than 0.5. The molecular weight is determined by assay of the terminal functional groups and is related to the number average molecular weight. The polyester intermediates may be produced by (1) an esterification reaction of one or more glycols with one or more dicarboxylic acids or anhydrides or (2) by trans esterification reaction, i.e., the reaction of one or more glycols with esters of dicarboxylic acids. Mole ratios generally in excess of more than one mole of glycol to acid are preferred so as to obtain linear chains having a preponderance of terminal hydroxyl groups. Suitable polyester intermediates also include various lactones such as polycaprolactone typically made from ε-caprolactone and a bifunctional initiator such as diethylene glycol. The dicarboxylic acids of the desired polyester can be aliphatic, cycloaliphatic, aromatic, or combinations thereof. Suitable dicarboxylic acids which may be used alone or in mixtures generally have a total of from 4 to 15 carbon atoms and include: succinic, glutaric, adipic, pimelic, suberic, azelaic, sebacic, dodecanedioic, isophthalic, terephthalic, cyclohexane dicarboxylic, and the like. Anhydrides of the above dicarboxylic acids such as phthalic anhydride, tetrahydrophthalic anhydride, or the like, can also be used. Adipic acid is a preferred acid. The glycols which are reacted to form a desirable polyester intermediate can be aliphatic, aromatic, or combinations thereof, including any of the glycols described above in the chain extender section, and have a total of from 2 to 20 or from 2 to 12 carbon atoms. Suitable examples include ethylene glycol, 1,2-propanediol, 1,3-propanediol, 1,3-butanediol, 1,4-butanediol, 1,5-pentanediol, 1,6-hexanediol, 2,2-dimethyl-1,3-propanediol, 1,4-cyclohexanedimethanol, decamethylene glycol, dodecamethylene glycol, and mixtures thereof.

The polyol component may also include one or more polycaprolactone polyester polyols. The polycaprolactone polyester polyols useful in the technology described herein include polyester diols derived from caprolactone monomers. The polycaprolactone polyester polyols are terminated by primary hydroxyl groups. Suitable polycaprolactone polyester polyols may be made from ε-caprolactone and a bifunctional initiator such as diethylene glycol, 1,4-butanediol, or any of the other glycols and/or diols listed herein. The polycaprolactone polyester polyols may be linear polyester diols derived from caprolactone monomers.

Useful examples include CAPA™ 2202A, a 2000 number average molecular weight (Mn) linear polyester diol, and CAPA™ 2302A, a 3000 Mn linear polyester diol, both of which are commercially available from Perstorp Polyols Inc. These materials may also be described as polymers of 2-oxepanone and 1,4-butanediol.

The polycaprolactone polyester polyols may be prepared from 2-oxepanone and a diol, where the diol may be 1,4-butanediol, diethylene glycol, monoethylene glycol, 1,6-hexanediol, 2,2-dimethyl-1,3-propanediol, or any combination thereof. The diol used to prepare the polycaprolactone polyester polyol may be linear. The polycaprolactone polyester polyol may be prepared from 1,4-butanediol. The polycaprolactone polyester polyol may have a number average molecular weight from 500 to 10,000, or from 500 to 5,000, or from 1,000 or even 2,000 to 4,000 or even 3000.

Suitable hydroxyl terminated polyether intermediates include polyether polyols derived from a diol or polyol

having a total of from 2 to 15 carbon atoms, for example an alkyl diol or glycol which is reacted with an ether comprising an alkylene oxide having from 2 to 6 carbon atoms, typically ethylene oxide or propylene oxide or mixtures thereof. For example, hydroxyl functional polyether can be produced by first reacting propylene glycol with propylene oxide followed by subsequent reaction with ethylene oxide. Primary hydroxyl groups resulting from ethylene oxide are more reactive than secondary hydroxyl groups and thus are preferred. Useful commercial polyether polyols include poly(ethylene glycol) comprising ethylene oxide reacted with ethylene glycol, poly(propylene glycol) comprising propylene oxide reacted with propylene glycol, poly(tetramethylene ether glycol) comprising water reacted with tetrahydrofuran which can also be described as polymerized tetrahydrofuran, and which is commonly referred to as PTMEG. The polyether intermediate may include PTMEG. Suitable polyether polyols also include polyamide adducts of an alkylene oxide and can include, for example, ethylenediamine adduct comprising the reaction product of ethylenediamine and propylene oxide, diethylenetriamine adduct comprising the reaction product of diethylenetriamine with propylene oxide, and similar polyamide type polyether polyols. Copolyethers can also be utilized in the described compositions. Typical copolyethers include the reaction product of THF and ethylene oxide or THF and propylene oxide. These are available from BASF as PolyTHF® B, a block copolymer, and poly THF® R, a random copolymer. The various polyether intermediates generally have a number average molecular weight (Mn) as determined by assay of the terminal functional groups which is an average molecular weight greater than about 700, such as from about 700 to about 10,000, from about 1,000 to about 5,000, or from about 1,000 to about 2,500. The polyether intermediate may include a blend of two or more different molecular weight polyethers, such as a blend of 2,000 $M_n$ and 1000 $M_n$ PTMEG.

Suitable hydroxyl terminated polycarbonates include those prepared by reacting a glycol with a carbonate. U.S. Patent No. 4,131,731 is hereby incorporated by reference for its disclosure of hydroxyl terminated polycarbonates and their preparation. Such polycarbonates are linear and have terminal hydroxyl groups with essential exclusion of other terminal groups. The essential reactants are glycols and carbonates. Suitable glycols are selected from cycloaliphatic and aliphatic diols containing 4 to 40, and or even 4 to 12 carbon atoms, and from polyoxyalkylene glycols containing 2 to 20 alkoxy groups per molecule with each alkoxy group containing 2 to 4 carbon atoms. Suitable diols include aliphatic diols containing 4 to 12 carbon atoms such as 1,4-butanediol, 1,5-pentanediol, neopentyl glycol, 1,6-hexanediol, 2,2,4-trimethyl-1,6-hexanediol, 1,10-decanediol, hydrogenated dilinoleylglycol, hydrogenated dioleylglycol, 3-methyl-1,5-pentanediol; and cycloaliphatic diols such as 1,3-cyclohexanediol, 1,4-dimethylolcyclohexane, 1,4-cyclohexanediol-, 1,3-dimethylolcyclohexane-, 1,4-endomethylene-2-hydroxy-5-hydroxymethyl cyclohexane, and polyalkylene glycols. The diols used in the reaction may be a single diol or a mixture of diols depending on the properties desired in the finished product. Polycarbonate intermediates which are hydroxyl terminated are generally those known to the art and in the literature. Suitable carbonates are selected from alkylene carbonates composed of a 5 to 7 membered ring. Suitable carbonates for use herein include ethylene carbonate, trimethylene carbonate, tetramethylene carbonate, 1,2-propylene carbonate, 1,2-butylene carbonate, 2,3-butylene carbonate, 1,2-ethylene carbonate, 1,3-pentylene carbonate, 1,4-pentylene carbonate, 2,3-pentylene carbonate, and 2,4-pentylene carbonate. Also, suitable herein are dialkylcarbonates, cycloaliphatic carbonates, and diarylcarbonates. The dialkylcarbonates can contain 2 to 5 carbon atoms in each alkyl group and specific examples thereof are diethylcarbonate and dipropylcarbonate. Cycloaliphatic carbonates, especially dicycloaliphatic carbonates, can contain 4 to 7 carbon atoms in each cyclic structure, and there can be one or two of such structures. When one group is cycloaliphatic, the other can be either alkyl or aryl. On the other hand, if one group is aryl, the other can be alkyl or cycloaliphatic. Examples of suitable diarylcarbonates, which can contain 6 to 20 carbon atoms in each aryl group, are diphenylcarbonate, ditolylcarbonate, and dinaphthylcarbonate. Particularly, the hydroxyl terminated polycarbonate may be polyhexamethylene carbonate diol, polytetramethylene carbonate diol or a polycarbonate copolymer diol. More particularly, the hydroxyl terminated polycarbonate is a polyhexamethylene carbonate diol.

Suitable polysiloxane polyols include alpha-omega-hydroxyl or amine or carboxylic acid or thiol or epoxy terminated polysiloxanes. Examples include poly(dimethysiloxane) terminated with a hydroxyl or amine or carboxylic acid or thiol or epoxy group. The polysiloxane polyols may be hydroxyl terminated polysiloxanes. The polysiloxane polyols may have a number-average molecular weight in the range from 300 to 5,000, or from 400 to 3,000.

Polysiloxane polyols may be obtained by the dehydrogenation reaction between a polysiloxane hydride and an aliphatic polyhydric alcohol or polyoxyalkylene alcohol to introduce the alcoholic hydroxy groups onto the polysiloxane backbone.

The polysiloxanes may be represented by one or more compounds having the following formula:

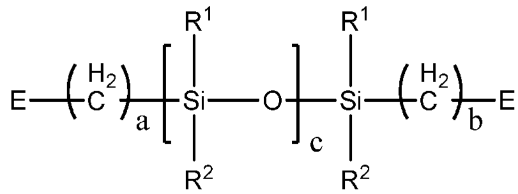

in which: each $R^1$ and $R^2$ are independently a 1 to 4 carbon atom alkyl group, a benzyl, or a phenyl group; each E is OH or $NHR^3$ where $R^3$ is hydrogen, a 1 to 6 carbon atoms alkyl group, or a 5 to 8 carbon atoms cyclo-alkyl group; a and b are each independently an integer from 2 to 8; c is an integer from 3 to 50. In amino-containing polysiloxanes, at least one of the E groups is $NHR^3$. In the hydroxyl-containing polysiloxanes, at least one of the E groups is OH. For example, both $R^1$ and $R^2$ are methyl groups.

Suitable examples include alpha-omega-hydroxypropyl terminated poly(dimethysiloxane) and alpha-omega-amino propyl terminated poly(dimethysiloxane), both of which are commercially available materials. Further examples include copolymers of the poly(dimethysiloxane) materials with a poly(alkylene oxide).

The polyol component, when present, may include poly(ethylene glycol), poly(tetramethylene ether glycol), poly(trimethylene oxide), ethylene oxide capped poly(propylene glycol), poly(butylene adipate), poly(ethylene adipate), poly(hexamethylene adipate), poly(tetramethylene-co-hexamethylene adipate), poly(3-methyl-1,5-pentamethylene adipate), polycaprolactone diol, poly(hexamethylene carbonate) glycol, poly(pentamethylene carbonate) glycol, poly(trimethylene carbonate) glycol, dimer fatty acid based polyester polyols, vegetable oil based polyols, or any combination thereof.

Examples of dimer fatty acids that may be used to prepare suitable polyester polyols include Priplast™ polyester glycols/polyols commercially available from Croda and Radia® polyester glycols commercially available from Oleon.

The polyol component may include a polyether polyol, a polycarbonate polyol, a polycaprolactone polyol, or any combination thereof.

The polyol component may include a polyether polyol. The polyol component may be essentially free of or even completely free of polyester polyols. The polyol component may be used to prepare the TPU is substantially free of, or even completely free of polysiloxanes.

The polyol component may include ethylene oxide, propylene oxide, butylene oxide, styrene oxide, poly(tetramethylene ether glycol), poly(propylene glycol), poly(ethylene glycol), copolymers of poly(ethylene glycol) and poly(propylene glycol), epichlorohydrin, and the like, or combinations thereof. The polyol component may include poly(tetramethylene ether glycol).

The polyol may have a number average molecular weight of at least 900. The polyol may have a number average molecular weight of at least 900, 1,000, 1,500, 1,750, and/or a number average molecular weight up to 5,000, 4,000, 3,000, 2,500, or even 2,000.

The polyol component may comprise a polycaprolactone polyester polyether polyol, a polyether polyol, a polycaprolactone polyester polyether copolymer polyol, a polyester polyol, or any combination thereof.

The polyol component may comprise a polycaprolactone polyester polyether polyol, a poly(tetramethylene ether glycol), a polycaprolactone polyester poly(tetramethylene ether glycol) copolymer polyol, a polybutylene adipate, a polybutylene-hexylene adipate (an adipate made from a mixture of 1,4-butanediol and 1,6-hexanediol), or any combination thereof. The polyol component may comprise a polycaprolactone polyester poly(tetramethylene ether glycol) copolymer polyol.

The thermoplastic polyurethane reaction product disclosed herein may be formed from a diol mixture having a first diol and a second diol. As disclosed herein, the first diol may be selected from one or more of a polycarbonate diol, a polycaprolactone diol, and a poly(tetrahydrofuran) diol. The first diol may be a polycarbonate diol. The first diol may be a polycaprolactone diol. The first diol may be a poly(tetrahydrofuran) diol.

The second diol in the diol mixture is selected from one or more of perfluoropolyether, a hydrogenated polybutadiene diol, and a poly(dimethysiloxane). The second diol may be a perfluoropolyether. The second diol may be a hydrogenated polybutadiene diol. The second diol may be a poly(dimethysiloxane).

The diol mixture used in the claimed invention comprises a first diol and a second diol, wherein the first diol is a polycarbonate polyol and the second diol is selected from one or more of perfluoropolyether and a hydrogenated polybutadiene diol.

**In** one embodiment the first diol is a polycarbonate polyol and the second diol is a perfluoropolyether. In another embodiment, the first diol is a polycarbonate polyol, the second diol is a hydrogenated polybutadiene diol.

**In** one embodiment, the thermoplastic polyurethane composition comprises the reaction product of a methylene diphenyl diisocyanate, a diol mixture including a polycarbonate polyol and a perfluoropolyether.

**In** one embodiment, the thermoplastic polyurethane composition comprises the reaction product of a methylene diphenyl diisocyanate, a diol mixture including a polycarbonate polyol and a hydrogenated polybutadiene diol.

**In** one embodiment, the thermoplastic polyurethane composition comprises the reaction product of a methylene diphenyl diisocyanate, a diol mixture including a polycarbonate polyol and a perfluoropolyether.

In one embodiment, the thermoplastic polyurethane composition comprises the reaction product of a methylene diphenyl diisocyanate, a diol mixture including a polycarbonate polyol and a hydrogenated polybutadiene diol.

In some embodiments, the second diol in the diol mixture is at least 15 wt. % of the diol mixture. In another embodiment, the second diol in the diol mixture is at least 18 wt. % of the diol mixture. In another embodiment, the second diol in the diol mixture is at least 20 wt. % of the diol mixture. In another embodiment, the second diol in the diol mixture is at

least 22 wt. % of the diol mixture.

The second diol mixture may range from 15 to 50 wt.% of the diol mixture, or from 18 to 45 wt.% of the diol mixture, or from 20 to 40 wt.% of the diol mixture, or from 22 to 37 wt.% of the diol mixture.

The Chain Extender Component:

The TPU reaction product of the compositions of the instant disclosure are further formed from a chain extender. Suitable chain extenders include relatively small polyhydroxy compounds, for example lower aliphatic or short chain glycols having from 2 to 20, or 2 to 12, or 2 to 10 carbon atoms. Suitable examples include ethylene glycol, diethylene glycol, propylene glycol, dipropylene glycol, 1,4-butanediol (BDO), 1,6-hexanediol (HDO), 1,3-butanediol, 1,5-pentanediol, neopentylglycol, 1,4-cyclohexanedimethanol (CHDM), 2,2-bis[4-(2-hydroxyethoxy) phenyl]propane (HEPP), hexamethylenediol, heptanediol, nonanediol, dodecanediol, 3-methyl-1,5-pentanediol, ethylenediamine, butanediamine, hexamethylenediamine, and hydroxyethyl resorcinol (HER), and the like, as well as mixtures thereof. In some embodiments, the chain extender includes BDO, HDO, 3-methyl-1,5-pentanediol, or a combination thereof. In some embodiments, the chain extender includes BDO. Other glycols, such as aromatic glycols could be used, but in some embodiments the TPUs described herein are essentially free of or even completely free of such materials.

In some embodiments, the chain extender used to prepare the TPU includes a cyclic chain extender. Suitable examples include CHDM, HEPP, HER, and combinations thereof. In some embodiments, the chain extender used to prepare the TPU includes an aromatic cyclic chain extender, for example, HEPP, HER, or a combination thereof. In some embodiments, the chain extender used to prepare the TPU includes an aliphatic cyclic chain extender, for example, CHDM.

In some embodiments, the chain extender component includes 1,4-butanediol, 2-ethyl-1,3-hexanediol, 2,2,4-trimethyl pentane-1,3-diol, 1,6-hexanediol, 1,4-cyclohexane dimethylol, 1,3-propanediol, 3-methyl-1,5-pentanediol or combinations thereof. In some embodiments, the chain extender component includes 1,4-butanediol, 3-methyl-1,5-pentanediol or combinations thereof. In some embodiments, the chain extender component includes 1,4-butanediol.

In some embodiments, the chain extender component comprises a linear alkylene diol. In some embodiments, the chain extender component comprises 1,4-butanediol, dipropylene glycol, or a combination of the two. In some embodiments, the chain extender component comprises 1,4-butanediol. In some embodiments, the chain extender component can include alkykaryl diols. Suitable alkyaryl diols include hydroquinone bis(β-hydroxyethyl)ether (HQEE), 1,4-benzenedimethanol, bisethoxy biphenol, bisphenol A ethoxylates, bisphenol F ethoxylates and the like. Still other suitable chain extenders are 1,3-bis(2-hydroxyethyl)benzene, and 1,2-bis(2-hydroxyethoxy)benzene. Mixtures of any of the above noted chain extenders can also be utilized.

In some embodiments, the chain extender is selected from one or more of 1, 3-propanediol, hydroquinone bis (2-hydroxyethyl) ether, and 1, 4-butanediol.

In one embodiment, the first diol is a polycarbonate polyol, the second diol is a perfluoropolyether, and the chain extender is hydroquinone Bis (2-hydroxyethyl) ether.

In one embodiment, the first diol is a polycarbonate polyol, the second diol is a hydrogenated polybutadiene diol, and the chain extender is 1, 3-propanediol.

In one embodiment, the first diol is a polycarbonate polyol, the second diol is a hydrogenated polybutadiene diol, and the chain extender is 1, 4-butanediol.

In one embodiment, the first diol is a polycarbonate polyol, the second diol is a hydrogenated polybutadiene diol, and the chain extender is hydroquinone Bis (2-hydroxyethyl) ether.

In some embodiments, the mole ratio of the chain extender to the polyol is greater than 1.5. In other embodiments, the mole ratio of the chain extender to the polyol is at least (or greater than) 1.5, 2.0, 3.5, 3.7, or even 3.8 and/or the mole ratio of the chain extender to the polyol may go up to 5.0, or even 4.0.

The thermoplastic polyurethane composition of the instant disclosure includes hard blocks and soft blocks. The hard block is derived by a reaction of diisocyanate component and chain extender component. The soft block is derived by reaction of a diol with diisocyanate, and the characteristic thereof depends on the kind of the diol. In one embodiment, the hard block content of the thermoplastic polyurethane reaction product is at least 32 wt % based on the total weight of the thermoplastic polyurethane reaction product. In one embodiment, the hard block content of the thermoplastic polyurethane reaction product is at least 33 wt % based on the total weight of the thermoplastic polyurethane reaction product.

In one embodiment, the thermoplastic polyurethane composition comprises the reaction product of a methylene diphenyl diisocyanate, a diol mixture including a polycarbonate polyol and a perfluoropolyether, and a hydroquinone Bis (2-hydroxyethyl) ether chain extender, wherein the reaction product has a hard block content of at least 33 wt %.

In another embodiment, the thermoplastic polyurethane composition comprises the reaction product of a methylene diphenyl diisocyanate, a diol mixture including a polycarbonate polyol and a hydrogenated polybutadiene diol, and a 1, 3-propanediol chain extender, wherein the reaction product has a hard block content of at least 40 wt %.

In another embodiment, the thermoplastic polyurethane composition comprises the reaction product of a

methylene diphenyl diisocyanate, a diol mixture including a polycarbonate polyol and a hydrogenated polybutadiene diol, and a 1, 4-butanediol chain extender, and wherein the composition has a hard block content of at least 43 wt %.

In another embodiment, the thermoplastic polyurethane composition comprises the reaction product of a methylene diphenyl diisocyanate, a diol mixture including a polycarbonate polyol and a hydrogenated polybutadiene diol, and a and a hydroquinone Bis (2-hydroxyethyl) ether chain extender, and wherein the composition has a hard block content of at least 35 wt %.

The reaction product of the thermoplastic polyurethane compositions described herein may be prepared by reacting a) the polyisocyanate component described above; b) the polyol component described above; and c) the chain extender component described above, where the reaction may be carried out in the presence of a catalyst. The reaction may be carried in either a batch or continuous process.

The process to produce the TPU polymer of this invention can utilize conventional and hereafter developed TPU manufacturing equipment and known or hereafter developed processes. The TPU may be produced in the so-called one-shot, semi-prepolymer or prepolymer method, by casting, extrusion or any other process known to the person skilled in the art. In one embodiment, the process is a so-called "one-shot" process where all three reactants are added to an extruder reactor and reacted.

<u>Other Additives:</u>

The Thermoplastic polyurethane compositions disclosed herein, in addition to the TPU reaction product, may further contain other optional components.

Optional additive components may be present during the reaction, and/or incorporated into the TPU reaction product described above to improve processing and other properties. These additives include but are not limited to antioxidants, organic phosphites, phosphines and phosphonites, hindered amines, organic amines, organo sulfur compounds, lactones and hydroxylamine compounds, biocides, fungicides, antimicrobial agents, compatibilizers, electro-dissipative or anti-static additives, fillers and reinforcing agents, such as titanium dioxide, alumina, clay and carbon black, flame retardants, such as phosphates, halogenated materials, and metal salts of alkyl benzenesulfonates, impact modifiers, such as methacrylate-butadiene-styrene ("MBS") and methylmethacrylate butylacrylate ("MBA"), mold release agents such as waxes, fats and oils, pigments and colorants, plasticizers, polymers, rheology modifiers such as monoamines, polyamide waxes, silicones, and polysiloxanes, slip additives, such as paraffinic waxes, hydrocarbon polyolefins and/or fluorinated polyolefins, and UV stabilizers, which may be of the hindered amine light stabilizers (HALS) and/or UV light absorber (UVA) types. Other additives may be used to enhance the performance of the TPU composition or blended product. All of the additives described above may be used in an effective amount customary for these substances.

These additional additives can be incorporated into the components of, or into the reaction mixture for, the preparation of the TPU reaction product, or after making the TPU reaction product, in the TPU compositions. In another process, all the materials can be mixed with the TPU reaction product and then melted or they can be incorporated directly into the melt of the TPU reaction product.

It is usually preferable to incorporate one or more antioxidants into the TPU reaction product and/or TPU compositions described above. These may be added during the reaction to form the TPU reaction product, blended into the previously-formed polymer described above, or added to the TPU composition. Suitable antioxidants include phenolic types, organic phosphites, phosphines and phosphonites, hindered amines, organic amines, organo sulfur compounds, lactones and hydroxylamine compounds. For applications in which transparency is wanted, the antioxidant is preferably soluble in the TPU reaction product described above, or dispersable therein as very fine droplets or particles. Many suitable antioxidant materials are available commercially. These include Irganox™ 1010, Irganox™ MD1024, Irgaphos™ 168, Irgaphos™ 126, all available from BASF Specialty Chemicals, and the like. Antioxidants may be used in the TPU compositions in conventional amounts, such as, 0.1 to 3 weight percent, or 0.2 to 2 weight percent, or 0.3 to 1.1 weight percent.

TPU compositions of the present disclosure may also contain about 0.10 to about 10.0% by weight of an antimicrobial and/or biocide material. In alternative embodiments of the present invention, the composition may contain about 1 to about 6% by weight of an antimicrobial and/or biocide material, about 2 to about 4% by weight of an antimicrobial and/or biocide material, as well as numerous percentages in between. The terms "antimicrobial" and/or "biocide" in the context of this formulation is intended to include, but is not limited to fungicides, herbicides, insecticides, antimicrobial agents comprising sodium, potassium, calcium, zinc, copper, and barium salts of carbonate, silicate, sulfate, halide, and borate in all forms; zinc carboxylates; boric acids; sodium dichromate; copper chrome arsenate (CCA); chromated copper borate (CBC); ammoniacal copper arsenate (ACA); ammoniacal copper zinc arsenate (ACZA); copper chromium fluoride (CFK); copper chromium fluoroborate (CCFB); copper chromium phosphorous (CCP); propiconazole tebuconazole; organo-chloride such as pentachlorophenol (PCP); quaternary ammonium compounds (MC); copper 8-hydroxyquinoline or copper oxene; tri-n-butyltin oxide (TBTO); tri-n-butyltin naphthenate (TBTN); didecyldimethylammonium bromide (DDAB); didecyldimethylammonium chloride (DDAC); silver ions, mercury ions, carbamates, isothiazolones, chlorinated

phenoxy and polyhexamethylene beguanidide hydrochlorides, barium metaborate monohydrate, borate salts and mixtures thereof. Preferred compositions of the present invention are water insoluble and comprise inorganic biocides.

The TPU compositions disclosed herein may further include a compatibilizer. Useful compatibilizers include maleated thermoplastics, thermoplastic elastomer block copolymers, crystallizable copolymers of propylene with ethylene or other higher α-olefins, chlorinated thermoplastics, ionomers, maleated elastomeric copolymers, and mixtures thereof.

Suitable compatibilizers may also include modified polyolefins which include modified thermoplastics and modified rubbers. In one or more embodiments, these modified polyolefins include at least one functional group attached thereto. In one or more embodiments, these functional groups can include carboxylic acid; C1 to C8 carboxylate ester such as carbomethoxy, carboethoxy, carbopropoxy, carbobutoxy, carbopentoxy, carbohexoxy, carboheptoxy, carboctoxy, and isomeric forms thereof; carboxylic acid anhydride; carboxylate salts formed from the neutralization of carboxylic acid group(s) with metal ions from Groups I, II, III, IV-A and VII of the periodic table, illustratively including sodium, potassium, lithium, magnesium, calcium, iron, nickel, zinc, and aluminum, and mixtures thereof; amide; epoxy; hydroxy; amino; and C2 to C6 acyloxy such as acetoxy, propionyloxy, or butyryloxy. In one or more embodiments, these functional groups may be part of an unsaturated monomer precursor that can be copolymerized with an olefin monomer or grafted onto a polyolefin to form the modified polyolefin.

Functionalizing monomers or agents include acrylic acid, methacrylic acid, maleic acid, maleic anhydride, acrylamide, methacrylamide, glycidyl acrylate, glycidyl methacrylate, vinyl acetate, vinyl butyrate, methyl acrylate, ethyl acrylate, butyl acrylate, 2-hydroxyethyl acrylate, sodium acrylate, zinc acrylate, the ionic hydrocarbon polymers from the polymerization of α-olefins with α,β-ethylenically unsaturated carboxylic acids.

Suitable modified polyolefins include those disclosed in U.S. Patent Nos. 6,001,484, 6,072,003, 3,264,272, and 3,939,242, which are incorporated herein by reference.

In one or more embodiments, the mer units of the polyolefin containing the functional groups can be present in the polyolefin in an amount from about 0.05 to about 5 mole percent. For example, in the case of maleated polyethylene, from about 0.005 to about 5 mole percent of the mer units include the residue of maleic acid pendent to the backbone.

In one or more embodiments, useful modified polyolefins can be obtained under the tradename OPTEMA™ TC120 and TC220 (ExxonMobil), which are ethylmethacrylate copolymers, and POLYBOND™ (Chemtura), or FUSABOND™ (DuPont), which are maleated polypropylenes.

Maleated elastomeric copolymers include copolymers of ethylene, an α-olefin, and one or more dienes, where the copolymer is reacted with maleic anhydride to provide further functionality. These copolymers are commercially available under the tradename EXXELOR™ (ExxonMobil). Compatibilizer as disclosed herein may be used in the TPU compositions in conventional amounts, such as, 0.1 to 50 weight percent, or 0.3 to 30 weight percent, or 0.5 to 20 weight percent.

The TPU compositions disclosed herein may further include an antistatic agent. A number of antistatic agents are known in the art. Sometimes, the antistatic agent is applied to the surface of a polymeric article made from the TPU composition by means of spraying or dipping.

Low molecular weight antistatic agents are also sometimes blended with the TPU composition described above rather than coated on the surface. Such low molecular weight antistatic agents include: ethoxylated fatty amines, ester, or amides such as those described in U.S. Patents 3,631,162; 3,591,563; 3,575,903; 3,441,552; 3,441,552; and 3,270,650; 3,468,702; 3,454,494; 3,365,437; 3,223,545; and 3,206,429; quaternary ammonium salts such as those described in U.S. Patents 3,933,871; 3,862,045; 3,850,818; 3,395,100; 3,324,091; and 3,272,648; or alkylsulphonates, sulphates or phosphates such as those described in U.S. Patents 3,475,203 and 3,446,651, and Japanese Patents 82-30,756; 82-202,338; and 73-14,651

Low molecular weight antistatic agents blended into the TPU compositions described above are generally organic compounds comprising a hydrophobic component and a hydrophilic component. The hydrophobic component generally provides compatibility with the polymer and thereby links the two materials together. The hydrophilic component generally absorbs moisture and causes water to be uniformly distributed on the surface of the particular polymer. This water film formed on the surface increases surface conductivity by means of an ion conduction process, thereby increasing the rate of static charge dissipation. Consequently, conventional low molecular weight internal antistats generally do not improve volume conductivity of the polymer and are generally sensitive to atmospheric humidity, typically providing poor performance at low humidity.

Internal, low molecular weight antistatic agents are generally designed to migrate from the interior of the TPU compositions described above to the surface during or after molding. Gradual surface migration can be advantageous, since it can replace any antistatic agent at the surface which is lost due to evaporation, cleaning or wear. However, the migration must occur at the proper rate. If it is too fast, the migration can cause blooming, surface smearing and molding difficulties; if it is too slow, the antistatic properties will be erratic, since any lost antistatic agent is not promptly replaced. Slow migration is a problem prevalent in polymers having high crystallinity, such as polypropylene, and migration may take up to about a month after molding to reach maximum antistatic performance.

Additional representative anti-static agents that may be included in the mixture include quarternary ammonium compounds such as disclosed in U.S. Patent No. 5,933,693, including but not limited to quarternary ammonium salts of alkyl sulfuric acid and carboxylic acid; metallic salts of lithium, sodium, potassium, ammonium, calcium, and barium; complexes of metallic salts with polyhydric alcohols and their derivatives, such as 1,4 butanediol, ethylene glycol, propylene glycol and polyethylene glycol, and complexes of metallic salts with mono-ols such as ethylene glycol monomethyl ether and ethylene glycol monoethyl ether; hexahalogenated ionic compounds such as disclosed in U.S. Patent No. 5,677,357, including hexahalogenated phosphate compounds, such as potassium hexafluorophosphate, sodium hexafluorophosphate and ammonium hexafluorophosphate.

Metallic salt anti-static additives may be used in the composition such as the metallic salt that is carried by diglyme (2-methoxyethylether) and a triol, a polyether or butanediol.

Some antistatic agents, such as quaternary ammonium salts, are not able to withstand processing temperatures required in conventional fabricating or molding steps for some polymers. Additionally, conventional low molecular weight antistatic agents often tend to lose their antistatic effectiveness due to evaporation, or they cause undesirable odors or promote cracking or crazing.

The TPU compositions disclosed herein may further include a filler or reinforcing agent. Fillers include a wide range of particulate materials, including talc, marble, granite, carbon black, graphite, aramid, silica-alumina, zirconia, bentonite, antimony trioxide, coal-based fly ash, clay, feedspar, nepheline, fumed silica, alumina, magnesium oxide, zinc oxide, barium sulfate, aluminum silicate, calcium silicate, titanium dioxide, titanates, chalk, milled glass, silica or glass, glass microspheres, glass beads or glass fibers. The glass fibers used may be made from E, A or C glass and have preferably been provided with a size and with a coupling agent. Their diameter is generally from 6 to 20 $\mu$m. Use may be made either of continuous-filament fibers (rovings) or of chopped glass fibers (staple) whose length is from 1 to 10 mm, preferably from 3 to 6 mm.

The fillers may also be metal hydroxides, e.g., magnesium hydroxide, potassium hydroxide and aluminum trihydroxide; metal carbonates such as magnesium carbonate and calcium carbonate; metal sulfides and sulfates such as molybdenum disulfide and barium sulfate; metal borates such as barium borate, meta-barium borate, zinc borate and meta-zinc borate; metal anhydride such as aluminum anhydride; or aluminum trihydrate.

Boron nitride and various reclaimed and reground thermoset polyurethane and/or polyurea polymers may also be used.

Representative fillers include but are not limited to clay such as diatomite, kaolin and montmorillonite; huntite; celite; asbestos; ground minerals; and lithopone. These fillers are typically used a conventional manner and in conventional amounts, e.g., from 5 wt% or less to 50 wt% or more based on the weight of the composition.

Reinforcements include high aspect ratio materials such as platelets and fibers, which can be of glass, aramid, various other polymers, and the like. Additional materials which may be used include mineral fibers, whiskers, alumina fibers, mica, powdered quartz, metal fibers, carbon fibers and wollastonite. Reinforcing agents, are usually used in amounts of from 5 to 50% by weight, based on the entire layer or composition.

Fillers which are useful in some formulations include ignition resistance fillers which can include antimony oxide, decabromobiphenyl oxide, alumina trihydrate, magnesium hydroxide, borates, and halogenated compounds.

In addition, metal flakes (e.g., aluminum flakes from Transmet Corp.), metal powders, metal fibers, metal-coated fillers, e.g., nickel-coated glass fibers, and also other additives which screen electromagnetic waves, may be added. Aluminum flakes (K-102 from Transmet) are particularly suitable for EMI (electromagnetic interference) purposes. The compositions may also be mixed with additional carbon fibers, carbon black, in particular conductivity black, or nickel-coated carbon fibers.

Other miscellaneous fillers include wood fibers/flours/chips, rubber dust, cotton, starch, clay, synthetic fibers (e.g., polyolefin fibers), and carbon fibers.

The level of the filler depends upon the filler density; the higher the filler density, the more of it which can be added to the formulation without appreciably affecting the volume fraction of that filler. Accordingly, the level of the filler is discussed herein in terms of weight percent filler, based on the total formulation weight. In the formulations disclosed herein, the filler content ranges from about 0.1% to about 80%, preferably from about 5% to about 50% (except for carbon black, which is typically used at levels from about 0.1% to about 5 %), more preferably from about 5% to about 40%, and especially from about 8% to about 30%.

The TPU compositions disclosed herein may further include a flame retardant. The flame retardants may be, but not necessarily, intumescent. Examples include phenylbisdodecyl phosphate, phenylbisneopentyl phosphate, phenyl ethylene hydrogen phosphate, phenyl-bis-3,5,5'-trimethylhexyl phosphate), ethyldiphenyl phosphate, 2-ethylhexyl di(p-tolyl) phosphate, diphenyl hydrogen phosphate, bis(2-ethyl-hexyl) p-tolylphosphate, tritolyl phosphate, bis(2-ethylhexyl)-phenyl phosphate, tri(nonylphenyl) phosphate, phenylmethyl hydrogen phosphate di(dodecyl) p-tolyl phosphate, tricresyl phosphate, triphenyl phosphate, dibutylphenyl phosphate, p-tolyl bis(2,5,5'-trimethylhexyl) phosphate, 2-ethylhexyldiphenyl phosphate, and diphenyl hydrogen phosphate. The preferred flame retardants are bisphenol-A bis(diphenyl phosphate), resorcinol bis(diphenyl phosphate), and cresol bis(diphenyl phosphate).

Further examples of flame retardants include a brominated organic compound, for example, a brominated diol. It may contain from 5 to 20 carbon atoms, and in some embodiments 5 to 10, or even 5 carbon atoms, and may contain a quaternary carbon atom. The additive may be present in an amount sufficient to provide the desired flame retardancy, and in other embodiments may be present from 0 to 15 percent by weight of the overall composition, or even from 0 to 10, from 0.1 to 7, or from 0.2 to 5 percent by weight of the overall composition.

Further examples include brominated organic compounds. Suitable examples include brominated diols, brominated mono-alcohols, brominated ethers, brominated esters, brominated phosphates, and combinations thereof. Suitable brominated organic compounds may include tetrabromobisphenol-A, hexabromocyclododecane, poly (pentabromobenzyl acrylate), pentabromobenzyl acrylate, tetrabromobisphenol A-bis(2,3-dibromopropyl ether), tribromophenol, dibromoneopentyl glycol, tribromoneopentyl alcohol, tris(tribromoneopentyl) phosphate, and 4,4'-isopropylidenebis [2-(2,6-dibromophenoxy)ethanol].

In some embodiments, the flame retardant additive includes a metal salt of a halogen borate, metal salt of halogen phosphate, or a combination thereof. In some embodiments, combinations of retardants are used. Additional examples of flame retardant additives include a metal salt of organic sulfonate, for example, a sodium salt of an alkyl benzene sulfonate and in some embodiments, the flame retardant additive includes a nitrogen-containing compound. Flame retardants may be added to the TPU composition in conventional amounts. In some embodiments, the flame retardant may be present in the TPU compositions at an amount of from 0 weight percent to 30 weight percent based on the total weight of the TPU composition. In another embodiment, the flame retardant may be present in the TPU compositions at an amount of from 0.1 weight percent to 20 weight percent based on the total weight of the TPU composition. In one embodiment, the flame retardant may be present in the TPU compositions at an amount of from 0.5 weight percent to 15 weight percent based on the total weight of the TPU composition.

Industrial Applicability:

In many applications, it is desirable or even critical for the TPU utilized in manufacturing articles to exhibit good heat resistance. For instance, it is normally important for wires and cables and seals or gaskets, that are used in industrial applications to possess these desirable characteristics.

The TPU reaction product of the instant disclosure impart high temperature stability, sometimes referred to as heat resistance, of the instant TPU compositions over currently known TPU compositions. Within the scope of the present disclosure, the term "high temperature stability" relates to the capacity of the product to resist to high temperature. Thus, it can also be referred as "heat resistant".

Based on the detailed examples the skilled person is routinely able to repeat the assay to objectively determine whether TPU composition exhibit high temperature stability.

For example, in order to measure high temperature stability, TPU compositions may be compression molded into 1.9 to 2.0 mm thick plaques of rectangular shape and from 1.0 cm wide and 13.0 to 15.0 cm long. The plaques are placed on a rod and aging at a temperature of 200°C for 6 hours. This aging condition is one specified in ISO6722. After cooling, the plaques were measured for percent elongation. High temperature stability can be measured as a percent elongation of less than 20%. For example, the TPU composition is considered to exhibit a high temperature stability when the percentage of elongation is less than 20% when heated at 200°C for 6 hours. The percent elongation may be measured by determining the change of length according to the following formula:

$$Percent\ elongation\ (\Delta L)(\%) = \frac{Lenght\ after\ heat - Lenght\ before\ heat}{Lenght\ before\ heat}\ x\ 100.$$

In some embodiments, the percent elongation is less than 18%, or less than 18%, or less than 6%, or less than 3%.

TPU's may further be evaluated for retention of tensile strength and retention of ultimate elongation. The TPU compositions may be prepared and aged according to the aging conditions set forth above, i.e., 200° C for 6 hours. After which, retention of tensile strength and retention of ultimate elongation are measured according to ASTM D412. In one embodiment, the retention of tensile strength and retention of ultimate elongation are both greater than 60%. In another embodiment, the retention of tensile strength and retention of ultimate elongation are both greater than 65%.

In another aspect, the TPU compositions may be prepared according to the above and aged at 180° C for 168 hours. In such an embodiment, the retention of tensile strength and retention of ultimate elongation are both greater than 65%.

The instant compositions find a particularly useful applications to form articles such as coatings for wires and cables and a seal or gasket.

In some embodiments, the TPU compositions of the instant disclosure may be used to coat electric wires and

cables. Due to the good mechanical and physical properties of TPU compositions, and particularly, the high heat resistance of the TPU compositions described herein, cables or wires coated with instant TPU compositions may be used in mining and electrical power generation, which may be off-shore, solar based, wind turbine, or hydroelectric. In other embodiment, cables or wires coated with the TPU compositions might be used in construction where they are used in security, data, terminals, communication, and signal wiring. In other embodiment, cables or wires coated with the TPU compositions might be used in automotive, trains, subways, boats, and aviation industries.

In some embodiments, the TPU compositions of the instant disclosure may be used for manufacturing seals and gaskets. Seals and gaskets may be used in internal combustion engines, heavy equipment, appliances, and countless other applications also need to be resistant to heat.

Articles containing the various TPU compositions described above include any article that will be exposed to high temperatures during its use, and especially such articles which have not been made using thermoplastic polyurethanes in the past because of such materials having insufficient high temperature resistance or performance.

**Examples:**

Different TPU samples were prepared according to the recipes shown in Table 1. Examples indicated with * are reference examples.

Table 1A. Recipe information of selected TPU samples

| | Example 1* | Example 2 | Example 3 | Example 4 |
|---|---|---|---|---|
| Polyols | polycarbonate | Polycarbonate (69wt.%)/ fluorolink polyol(31wt.%) | Polycarbonate (77wt.%)/ fluorolink polyol(23wt.%) | Polycarbonate (66wt.%)/ hydrogenated polybutadiene diol(34wt. %) |
| Chain extenders | BDO | HQEE | HQEE | 1,3-propanediol |
| Hard block content | 45% | 35% | 35% | 41% |
| Isocyanate | MDI | MDI | MDI | MDI |
| Other additives | yes | no | no | no |

Table 1B. Recipe information of selected TPU samples

| | Example 5* | Example 6 | Example 7 | Example 8 |
|---|---|---|---|---|
| Polyols | Polycarbonate (77wt.%)/ PDMS diol(23wt. %) | Polycarbonate (75wt.%)/ hydrogenated polybutadiene diol(25wt. %) | Polycarbonate (63wt.%)/ hydrogenated polybutadiene diol(37wt.%) | Polycarbonate (74wt.%)/ hydrogenated polybutadiene diol(26wt. %) |
| Chain extenders | HQEE | 1,3-propanediol | BDO | HQEE |
| Hard block content | 35% | 41% | 45% | 35% |
| Isocyanate | MDI | MDI | MDI | MDI |
| Other additives | no | no | no | yes |

Polycarbonate was polyhexamethylene carbonate diol.

The samples were compression molded into 1.9-2.0mm thick plaques. Then the plaques were cut into rectangular shape strips about 1.0 cm wide and 13.0-15.0 cm long. The rectangular shape strip was placed on a rod in an oven at 200°C for 6 hours, with the middle part in contact with the rod so that most of the sample was free to elongate. This aging condition is one of the conditions specified in ISO6722.

High temperature stability was determined by measuring the change of length of the rectangular samples after being exposed to 200°C for 6 hours and calculated according to the following formula:

$$Percent\ elongation\ (\Delta L)(\%) = \frac{Lenght\ after\ heat - Lenght\ before\ heat}{Lenght\ before\ heat}\ x\ 100$$

Results are shown in Table 2. Example 1 is dripped and broken, whereas the other examples according to TPU compositions disclosed herein show much better dimensional stability after exposure to the high temperature, maintaining the original shape much better than the benchmark.

Table 2. Change of the length of the samples after exposed to 200°C for 6 hours

| | Example 1* | Example 2 | Example 3 | Example 4 | Example 5* | Example 6 | Example 7 | Example 8 |
|---|---|---|---|---|---|---|---|---|
| **Original** Length (cm) | 13.4 | 13.3 | 13.3 | 13.4 | 13.4 | 13.4 | 15 | 15.1 |
| Length after heat test (cm) | Dripped and broken | 13.4 | 13.4 | 13.8 | 15.8 | 14.2 | 14.9 | 15 |
| ΔL(%) | Not Measurable | 0.75 | 0.75 | 2.9 | 17.9 | 5.9 | Shrunk .67% | Shrunk .67% |

Polycarbonate was polyhexamethylene carbonate diol.

Examples 1* and 8 were also aged at 200°C for 6 hours as specified in ISO6722) and retention of tensile strength and retention ultimate elongation were determined according to ASTM D412and are shown in Table 4. For the condition of 200°C/6hr, the Example 8 shows higher than 60% retention of the tensile strength and ultimate elongation while the example 1* is melted.

Table 4. Retention of tensile strength and ultimate elongation of Example 8 and 1*

| *Aging condition* | *200C/6hr* | |
|---|---|---|
| *Retention of tensile property* | *Retention tensile strength* | *Retention ultimate elongation* |
| Example 8 | 62% | 68% |
| Example 1* | melted | melted |

Example 8 was additionally aged at 180° C for 168 hr., as specified in UL1581. The retention of tensile properties is shown in Table 5. Example 8 shows higher retention of tensile strength and ultimate elongation than the comparative Example 1*.

Table 5. Retention of tensile properties of inventive Example 8 at 180°C for 168hr

| *Aging condition* | *180C/168hr* | |
|---|---|---|
| *Retention of tensile property* | *Retention tensile strength* | *Retention ultimate elongation* |
| Example 8 | 69% | 70% |
| Example 1* | 51% | 34% |

Unless otherwise stated herein, reference to treat rates or amounts of components present in the lubricating compositions disclosed herein are quoted on an oil free basis, i.e., amount of active. Further, unless otherwise stated, "wt %" as used herein shall refer to the weight percent based on the total weight of the composition on an oil-free basis.

While various compositions, methods, and devices are described in terms of "comprising" various components or steps (interpreted as meaning "including, but not limited to"), the compositions, methods, and devices can also "consist essentially of" or "consist of" the various components and steps, and such terminology should be interpreted as defining essentially closed-member groups.

With respect to the use of substantially any plural and/or singular terms herein, those having skill in the art can

translate from the plural to the singular and/or from the singular to the plural as is appropriate to the context and/or application. The various singular/plural permutations may be expressly set forth herein for sake of clarity.

It will be understood by those within the art that, in general, terms used herein, and especially in the appended claims (e.g., bodies of the appended claims) are generally intended as "open" terms (e.g., the term "including" should be interpreted as "including but not limited to," the term "having" should be interpreted as "having at least," the term "includes" should be interpreted as "includes but is not limited to," etc.). It will be further understood by those within the art that if a specific number of an introduced claim recitation is intended, such an intent will be explicitly recited in the claim, and in the absence of such recitation, no such intent is present. For example, as an aid to understanding, the following appended claims may contain usage of the introductory phrases "at least one" and "one or more" to introduce claim recitations. However, the use of such phrases should not be construed to imply that the introduction of a claim recitation by the indefinite articles "a" or "an" limits any particular claim containing such introduced claim recitation to embodiments containing only one such recitation, even when the same claim includes the introductory phrases "one or more" or "at least one" and indefinite articles such as "a" or "an" (e.g., "a" and/or "an" should be interpreted to mean "at least one" or "one or more"); the same holds true for the use of definite articles used to introduce claim recitations. In addition, even if a specific number of an introduced claim recitation is explicitly recited, those skilled in the art will recognize that such recitation should be interpreted to mean at least the recited number (e.g., the bare recitation of "two recitations," without other modifiers, means at least two recitations, or two or more recitations). Furthermore, in those instances where a convention analogous to "at least one of A, B, and C, etc." is used, in general, such a construction is intended in the sense one having skill in the art would understand the convention (e.g., "a system having at least one of A, B, and C" would include but not be limited to systems that have A alone, B alone, C alone, A and B together, A and C together, B and C together, and/or A, B, and C together, etc.). In those instances where a convention analogous to "at least one of A, B, or C, etc." is used, in general, such a construction is intended in the sense one having skill in the art would understand the convention (e.g., "a system having at least one of A, B, or C" would include but not be limited to systems that have A alone, B alone, C alone, A and B together, A and C together, B and C together, and/or A, B, and C together, etc.). It will be further understood by those within the art that virtually any disjunctive word and/or phrase presenting two or more alternative terms, whether in the description, claims, or drawings, should be understood to contemplate the possibilities of including one of the terms, either of the terms, or both terms. For example, the phrase "A or B" will be understood to include the possibilities of "A" or "B" or "A and B."

In addition, where features or aspects of the disclosure may be described in terms of Markush groups, those skilled in the art will recognize that the disclosure is also thereby described in terms of any individual member or subgroup of members of the Markush group.

As will be understood by one skilled in the art, for any and all purposes, such as in terms of providing a written description, all ranges disclosed herein also encompass any and all possible subranges and combinations of subranges thereof. Any listed range can be easily recognized as sufficiently describing and enabling the same range being broken down into at least equal halves, thirds, quarters, fifths, tenths, etc. As a non-limiting example, each range discussed herein can be readily broken down into a lower third, middle third and upper third, etc. As will also be understood by one skilled in the art all language such as "up to," "at least," and the like include the number recited and refer to ranges which can be subsequently broken down into subranges as discussed above. Finally, as will be understood by one skilled in the art, a range includes each individual member. Thus, for example, a group having 1-3 wt. % refers to groups having 1, 2, or 3 wt.%. Similarly, a group having 1 to 5 wt. % refers to groups having 1, 2, 3, 4, or 5 wt. %, and so forth, including all points therebetween.

Moreover, where a recited range for a treat rate is provided, it is contemplated that such range shall include treat rates for individual components and/or a mixture of components. Thus, for example, a range of 1 to 3 wt % contemplates that a given component may be present in a range of 1 to 3 wt % or that a mixture of similar components can be present in a range from 1 to 3 wt %.

While the invention has been explained in relation to its preferred embodiments, it is to be understood that various modifications thereof will become apparent to those skilled in the art upon reading the specification. Therefore, it is to be understood that the invention disclosed herein is intended to cover such modifications as fall within the scope of the appended claims.

## Claims

**1.** A thermoplastic polyurethane composition (TPU) comprising:

the reaction product of:

an aromatic polyisocyanate;
a diol mixture including:

a first diol, which first diol is a polycarbonate polyol, and
a second diol selected from one or more of a perfluoropolyether and a hydrogenated polybutadiene diol, where the content of the second diol in the diol mixture is at least 15 wt % of the diol mixture; and

a chain extender;

the reaction product having a hard block content of at least 30 wt %.

2. The composition of claim 1, wherein the aromatic polyisocyanate is methylene diphenyl diisocyanate.

3. The composition of claim 1 or claim 2, wherein the chain extender is selected from one or more of 1, 3-propanediol, hydroquinone bis (2-hydroxyethyl) ether, and 1, 4-butanediol.

4. The composition of any one of the preceding claims, wherein the content of the second diol in the diol mixture is at least 18 wt % of the diol mixture, the content of the second diol in the diol mixture is at least 20 wt % of the diol mixture, or the content of the second diol in the diol mixture is at least 22 wt % of the diol mixture.

5. The composition of any one of the preceding claims, wherein the hard block content is at least 32 wt % of the reaction product or the hard block content is at least 33 wt % of the reaction product.

6. The composition of claim 1, wherein:

(a) the aromatic polyisocyanate is methylene diphenyl diisocyanate, the first diol is a polycarbonate polyol and the second diol is a perfluoropolyether; or
(b) the aromatic polyisocyanate is a methylene diphenyl diisocyanate, the first diol is a polycarbonate polyol and the second diol is a hydrogenated polybutadiene diol.

7. The composition of claim 1, wherein:

(a) the first diol is a polycarbonate polyol, the second diol is a perfluoropolyether, and the chain extender is hydroquinone Bis (2-hydroxyethyl) ether; or
(b) the first diol is a polycarbonate polyol, the second diol is a hydrogenated polybutadiene diol, and the chain extender is 1, 3-propanediol; or
(c) the first diol is a polycarbonate polyol, the second diol is a hydrogenated polybutadiene diol, and the chain extender is hydroquinone Bis (2-hydroxyethyl) ether.

8. The composition of any one of claims 1 to 4, wherein the aromatic polyisocyanate is methylene diphenyl diisocyanate, the first diol is a polycarbonate polyol, the second diol is a perfluoropolyether, and the chain extender is hydroquinone Bis (2-hydroxyethyl) ether, and wherein the composition has a hard block content of at least 33 wt %.

9. The composition of any one of claims 1 to 4, wherein the aromatic polyisocyanate is methylene diphenyl diisocyanate, the first diol is a polycarbonate polyol, the second diol is a hydrogenated polybutadiene diol, and the chain extender is 1, 3-propanediol, and wherein the composition has a hard block content of at least 40 wt %.

10. The composition of any one of claims 1 to 4, wherein the aromatic polyisocyanate is methylene diphenyl diisocyanate, the first diol is a polycarbonate polyol, the second diol is a hydrogenated polybutadiene diol, and the chain extender is 1, 4-butanediol, and wherein the composition has a hard block content of at least 43 wt %.

11. The composition of any one of the preceding claims, wherein the TPU composition has a high temperature stability as measured by percent elongation of less than 20% after heating at 200°C for 6 hours, the TPU composition has a high temperature stability as measured by percent elongation of less than 18% after heating at 200°C for 6 hours, or the TPU composition has a high temperature stability as measured by percent elongation of less than 6% after heating at 200°C for 6 hours,
wherein the percent elongation is measured by providing a TPU compositions molded into rectangular plaques of 1.9 to 2.0 mm thick, about 1.0 cm wide and from 13.0 to 15.0 cm long; placing the plaques on a rod; aging the plaques at a temperature of 200°C for 6 hours; allowing the plaques to cool; and determining the change of length.

12. The composition of any one of the preceding claims, wherein the TPU has a retention of tensile strength of 60% and

retention ultimate elongation of 60% as determined by ASTM D412 after 6h at 200°C.

**13.** A cable or wire coated with the TPU composition according to any one of the preceding claims.

**14.** A seal or gasket formed from the TPU composition according to any one of claims 1 to 12.

**15.** The use of a TPU composition according to any one of claims 1 to 12 to increase the high temperature stability of a coated cable or wire, a seal or a gasket.

## Patentansprüche

**1.** Thermoplastische Polyurethanzusammensetzung (TPU), umfassend:
das Reaktionsprodukt von:

einem aromatischen Polyisocyanat;
einem Diolgemisch, einschließlich:

eines ersten Diols, wobei das erste Diol ein Polycarbonatpolyol ist, und
eines zweiten Diols, ausgewählt aus einem oder mehreren von einem Perfluorpolyether und einem hydrierten Polybutadiendiol, wobei der Gehalt des zweiten Diols in dem Diolgemisch mindestens 15 Gew.-% des Diolgemischs beträgt; und
einem Kettenverlängerer;
wobei das Reaktionsprodukt einen Hartblockgehalt von mindestens 30 Gew.-% aufweist.

**2.** Zusammensetzung nach Anspruch 1, wobei das aromatische Polyisocyanat Methylendiphenyldiisocyanat ist.

**3.** Zusammensetzung nach Anspruch 1 oder Anspruch 2, wobei der Kettenverlängerer ausgewählt ist aus einem oder mehreren von 1,3-Propandiol, Hydrochinon-bis(2-hydroxyethyl)ether und 1,4-Butandiol.

**4.** Zusammensetzung nach einem der vorstehenden Ansprüche, wobei der Gehalt des zweiten Diols in dem Diolgemisch mindestens 18 Gew.-% des Diolgemischs beträgt, der Gehalt des zweiten Diols in dem Diolgemisch mindestens 20 Gew.-% des Diolgemischs beträgt oder der Gehalt des zweiten Diols in dem Diolgemisch mindestens 22 Gew.-% des Diolgemischs beträgt.

**5.** Zusammensetzung nach einem der vorstehenden Ansprüche, wobei der Hartblockgehalt mindestens 32 Gew.-% des Reaktionsprodukts beträgt oder der Hartblockgehalt mindestens 33 Gew.-% des Reaktionsprodukts beträgt.

**6.** Zusammensetzung nach Anspruch 1, wobei

(a) das aromatische Polyisocyanat Methylendiphenyldiisocyanat ist, das erste Diol ein Polycarbonatpolyol ist und das zweite Diol ein Perfluorpolyether ist oder
(b) das aromatische Polyisocyanat ein Methylendiphenyldiisocyanat ist, das erste Diol ein Polycarbonatpolyol ist und das zweite Diol ein hydriertes Polybutadiendiol ist.

**7.** Zusammensetzung nach Anspruch 1, wobei

(a) das erste Diol ein Polycarbonatpolyol ist, das zweite Diol ein Perfluorpolyether ist und der Kettenverlängerer Hydrochinon-bis(2-hydroxyethyl)ether ist oder
(b) das erste Diol ein Polycarbonatpolyol ist, das zweite Diol ein hydriertes Polybutadiendiol ist und der Kettenverlängerer 1,3-Propandiol ist oder
(c) das erste Diol ein Polycarbonatpolyol ist, das zweite Diol ein hydriertes Polybutadiendiol ist und der Kettenverlängerer Hydrochinon-bis(2-hydroxyethyl)ether ist.

**8.** Zusammensetzung nach einem der Ansprüche 1 bis 4, wobei das aromatische Polyisocyanat Methylendiphenyldiisocyanat ist, das erste Diol ein Polycarbonatpolyol ist, das zweite Diol ein Perfluorpolyether ist und der Kettenverlängerer Hydrochinon-bis(2-hydroxyethyl)ether ist und wobei die Zusammensetzung einen Hartblockgehalt von mindestens 33 Gew.-% aufweist.

9. Zusammensetzung nach einem der Ansprüche 1 bis 4, wobei das aromatische Polyisocyanat Methylendiphenyldiisocyanat ist, das erste Diol ein Polycarbonatpolyol ist, das zweite Diol ein hydriertes Polybutadiendiol ist und der Kettenverlängerer 1,3-Propandiol ist und wobei die Zusammensetzung einen Hartblockgehalt von mindestens 40 Gew.-% aufweist.

10. Zusammensetzung nach einem der Ansprüche 1 bis 4, wobei das aromatische Polyisocyanat Methylendiphenyldiisocyanat ist, das erste Diol ein Polycarbonatpolyol ist, das zweite Diol ein hydriertes Polybutadiendiol ist und der Kettenverlängerer 1,4-Butandiol ist und wobei die Zusammensetzung einen Hartblockgehalt von mindestens 43 Gew.-% aufweist.

11. Zusammensetzung nach einem der vorstehenden Ansprüche, wobei die TPU-Zusammensetzung eine Hochtemperaturstabilität aufweist, wie durch eine prozentuale Dehnung von weniger als 20 % nach Erhitzen bei 200 °C für 6 Stunden gemessen, die TPU-Zusammensetzung eine Hochtemperaturstabilität aufweist, wie durch eine prozentuale Dehnung von weniger als 18 % nach Erhitzen bei 200 °C für 6 Stunden gemessen, oder die TPU-Zusammensetzung eine Hochtemperaturstabilität aufweist, wie durch eine prozentuale Dehnung von weniger als 6 % nach Erhitzen bei 200 °C für 6 Stunden gemessen,
wobei die prozentuale Dehnung gemessen wird durch Bereitstellen einer TPU-Zusammensetzung, die zu rechteckigen Platten mit einer Dicke von 1,9 bis 2,0 mm, einer Breite von etwa 1,0 cm und einer Länge von 13,0 bis 15,0 cm geformt ist; Anordnen der Platten auf einem Stab; Altern der Platten bei einer Temperatur von 200 °C für 6 Stunden; Abkühlenlassen der Platten und Bestimmen der Längenänderung.

12. Zusammensetzung nach einem der vorstehenden Ansprüche, wobei das TPU eine Beibehaltung der Zugfestigkeit von 60 % und eine Beibehaltung der Reißdehnung von 60 % aufweist, wie gemäß ASTM D412 nach 6 h bei 200 °C bestimmt.

13. Kabel oder Draht, beschichtet mit der TPU-Zusammensetzung nach einem der vorstehenden Ansprüche.

14. Dichtung oder Flachdichtung, gebildet aus der TPU-Zusammensetzung nach einem der Ansprüche 1 bis 12.

15. Verwendung einer TPU-Zusammensetzung nach einem der Ansprüche 1 bis 12, um die Hochtemperaturstabilität eines beschichteten Kabels oder Drahtes, einer Dichtung oder einer Flachdichtung zu erhöhen.

**Revendications**

1. Composition de polyuréthane thermoplastique (TPU) comprenant :
le produit de réaction de :

    un polyisocyanate aromatique ;
    un mélange de diols comportant :

        un premier diol, ce premier diol étant un polyol de polycarbonate, et
        un second diol choisi parmi un ou plusieurs parmi un perfluoropolyéther et un diol de polybutadiène hydrogéné, où la teneur du second diol dans le mélange de diols est d'au moins 15 % en poids du mélange de diols ; et
        un agent d'allongement de chaîne ;
        le produit de réaction ayant une teneur en blocs durs d'au moins 30 % en poids.

2. Composition selon la revendication 1, dans laquelle le polyisocyanate aromatique est du diphényl-diisocyanate de méthylène.

3. Composition selon la revendication 1 ou la revendication 2, dans laquelle l'agent d'allongement de chaîne est choisi parmi un ou plusieurs parmi 1,3-propanediol, hydroquinone bis-(2-hydroxyéthyl)éther, et 1,4-butanediol.

4. Composition selon l'une quelconque des revendications précédentes, dans laquelle la teneur du second diol dans le mélange de diols est d'au moins 18 % en poids du mélange de diols, la teneur du second diol dans le mélange de diols est d'au moins 20 % en poids du mélange de diols, ou la teneur du second diol dans le mélange de diols est d'au moins 22 % en poids du mélange de diols.

5. Composition selon l'une quelconque des revendications précédentes, dans laquelle la teneur en blocs durs est d'au moins 32 % en poids du produit de réaction ou la teneur en blocs durs est d'au moins 33 % en poids du produit de réaction.

6. Composition selon la revendication 1, dans laquelle :

(a) le polyisocyanate aromatique est du diphényl-diisocyanate de méthylène, le premier diol est un polyol de polycarbonate et le second diol est un perfluoropolyéther ; ou
(b) le polyisocyanate aromatique est un diphényl-diisocyanate de méthylène, le premier diol est un polyol de polycarbonate et le second diol est un diol de polybutadiène hydrogéné.

7. Composition selon la revendication 1, dans laquelle :

(a) le premier diol est un polyol de polycarbonate, le second diol est un perfluoropolyéther, et l'agent d'allongement de chaîne est hydroquinone bis-(2-hydroxyéthyl)éther ; ou
(b) le premier diol est un polyol de polycarbonate, le second diol est un diol de polybutadiène hydrogéné, et l'agent d'allongement de chaîne est 1,3-propanediol ; ou
(c) le premier diol est un polyol de polycarbonate, le second diol est un diol de polybutadiène hydrogéné, et l'agent d'allongement de chaîne est hydroquinone bis-(2-hydroxyéthyl)éther.

8. Composition selon l'une quelconque des revendications 1 à 4, dans laquelle le polyisocyanate aromatique est diphényl-diisocyanate de méthylène, le premier diol est un polyol de polycarbonate, le second diol est un perfluoropolyéther, et l'agent d'allongement de chaîne est hydroquinone bis-(2-hydroxyéthyl)éther, et dans laquelle la composition a une teneur en blocs durs d'au moins 33 % en poids.

9. Composition selon l'une quelconque des revendications 1 à 4, dans laquelle le polyisocyanate aromatique est diphényl-diisocyanate de méthylène, le premier diol est un polyol de polycarbonate, le second diol est un diol de polybutadiène hydrogéné, et l'agent d'allongement de chaîne est 1,3-propanediol, et dans laquelle la composition a une teneur en blocs durs d'au moins 40 % en poids.

10. Composition selon l'une quelconque des revendications 1 à 4, dans laquelle le polyisocyanate aromatique est diphényl-diisocyanate de méthylène, le premier diol est un polyol de polycarbonate, le second diol est un diol de polybutadiène hydrogéné, et l'agent d'allongement de chaîne est 1,4-butanediol, et dans laquelle la composition a une teneur en blocs durs d'au moins 43 % en poids.

11. Composition selon l'une quelconque des revendications précédentes, dans laquelle la composition de TPU a une stabilité à température élevée telle que mesurée par un pourcentage d'allongement inférieur à 20 % après chauffage à 200 °C pendant 6 heures, la composition de TPU a une stabilité à température élevée telle que mesurée par un pourcentage d'allongement inférieur à 18 % après chauffage à 200 °C pendant 6 heures, ou la composition de TPU a une stabilité à température élevée telle que mesurée par un pourcentage d'allongement inférieur à 6 % après chauffage à 200 °C pendant 6 heures,
dans laquelle le pourcentage d'allongement est mesuré en fournissant une composition de TPU moulée en plaques rectangulaires de 1,9 à 2,0 mm d'épaisseur, d'environ 1,0 cm de large et de 13,0 à 15,0 cm de long ; en plaçant les plaques sur une tige ; en faisant vieillir les plaques à une température de 200 °C pendant 6 heures ; en laissant les plaques refroidir ; et en déterminant le changement de longueur.

12. Composition selon l'une quelconque des revendications précédentes, dans laquelle le TPU a une conservation de résistance en traction de 60 % et une conservation d'allongement à la rupture de 60 % telles que déterminées par ASTM D412 après 6h à 200 °C.

13. Câble ou fil revêtu de la composition de TPU selon l'une quelconque des revendications précédentes.

14. Joint ou garniture formé à partir de la composition de TPU selon l'une quelconque des revendications 1 à 12.

15. Utilisation d'une composition de TPU selon l'une quelconque des revendications 1 à 12 pour augmenter la stabilité à température élevée d'un câble ou fil revêtu, d'un joint ou d'une garniture.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 20170210846 A1
- US 11168175 B2
- WO 2019002226 A
- WO 2019016313 A
- US 4131731 A
- US 6001484 A
- US 6072003 A
- US 3264272 A
- US 3939242 A
- US 3631162 A
- US 3591563 A
- US 3575903 A
- US 3441552 A
- US 3270650 A
- US 3468702 A
- US 3454494 A
- US 3365437 A
- US 3223545 A
- US 3206429 A
- US 3933871 A
- US 3862045 A
- US 3850818 A
- US 3395100 A
- US 3324091 A
- US 3272648 A
- US 3475203 A
- US 3446651 A
- JP 57030756 A
- JP 57202338 A
- JP 48014651 A
- US 5933693 A
- US 5677357 A